# EUROPEAN PATENT APPLICATION

(11) **EP 1 364 577 A2**
(43) Date of publication of application: **26.11.2003**
(21) Application number: 03380118.4
(22) Date of filing: 14.05.2003
(51) Int. Cl.: A01K 5/02

(54) **Feeding trough for domestic animals**

(30) Priority: 24.05.2002 ES 200201341 U
(71) Applicant: José Ignacio Arruarte Mendizabal, 20280 Hondarribia (Guipuzcoa) (ES)
(72) Inventor: José Ignacio Arruarte Mendizabal, 20280 Hondarribia (Guipuzcoa) (ES)
(74) Representative: Urizar Anasagasti, Jesus Maria

(57) **Abstract**

A feeding trough for domestic animals, comprising a solid food hopper (2) which is emptied on a lower tray (4)as the food is consumed, and attached to them a water deposit emptying into a drinking trough (5), characterized as said deposit (6) slides downwards and rests on a lever similar to scissors (10), whose opposite branch is constituted by a lid (3) placed on the feeding trough (4), such that when the deposit (6) is full, it descends from its natural location, opening the lid (3) to permit the animal to eat, whereas when a part of the deposit (6) empties into a drinking trough (5), it is lifted again, closing the lid (3) on the feeding trough (4)to prevent the animal from eating.

## Description

As indicated by the title, the present invention refers to a feeding trough for domestic animals, particularly for dogs or another type of animal which, in normal conditions, eat only once or twice a day, keeping enough water available for them so as to satisfy their thirst.

Feeding troughs for animals are known consisting of a hopper which empties as the product is consumed, which falls into a lower tray; the drawback posed by this type of feeding troughs is that the amount the animal consumes cannot be controlled, nor the times per day it eats, therefore if this is in reference to dogs, not only does it create bad feeding habits but in anxious animals it can also cause more than a feeding problem. There are also known feeding troughs for animals that present a drive by means of a motor or another electrically driven device.

The feeding trough designed here favourably solves this drawback, since the times per day the animal eats can be programmed as well as the duration each meal has in order to thus control the amount, its operation is not conditional on a cut of accidental electrical provision. To do so, it uses a very simple system carrying out the opening of the feeding trough while a water deposit is filled which will be used for the animal's consumption; this water deposit slides downwards and rests on a part similar to scissors, whose opposite branch is constituted of a lid placed on the feeding trough such that when the deposit is full, it descends, opening the lid, permitting the animal to eat, said deposit has a programmable valve which empties the water into the lower drinking trough, by controlling the flow rate of this valve, the time it takes the water to be emptied from the deposit in the drinking trough is controlled, and as a result, the time the feeding trough is open, since when the weight of the deposit decreases, it is lifted, closing the lid as a result until the established programming carries out a new deposit filling period, at which instant the opening process of the feeding trough lid is repeated.

The object of the present invention will be better understood with the aid of the following description made on the basis of a practical embodiment example; this description is carried out on the basis of the attached drawing in which:

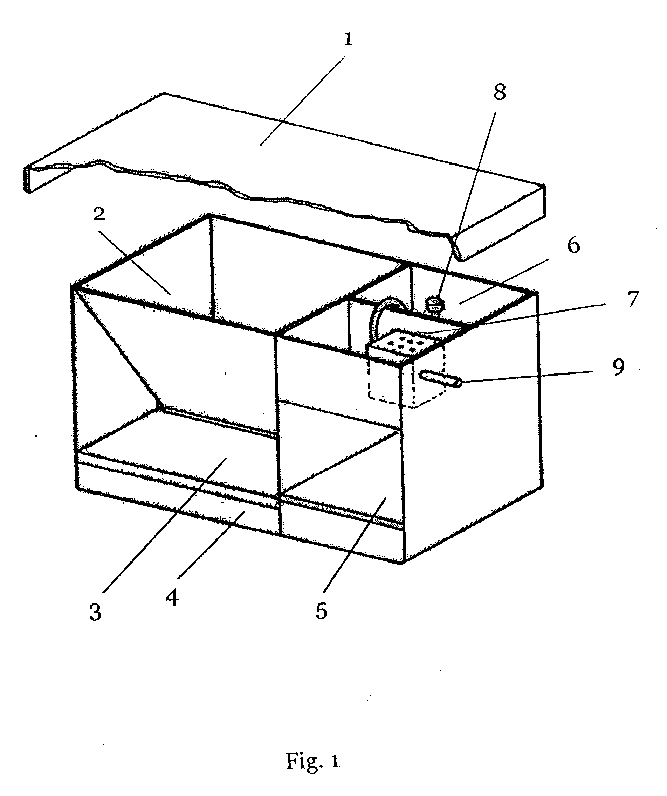

Figure 1 shows a general and perspective view of a feeding trough for animals carried out according to this invention.

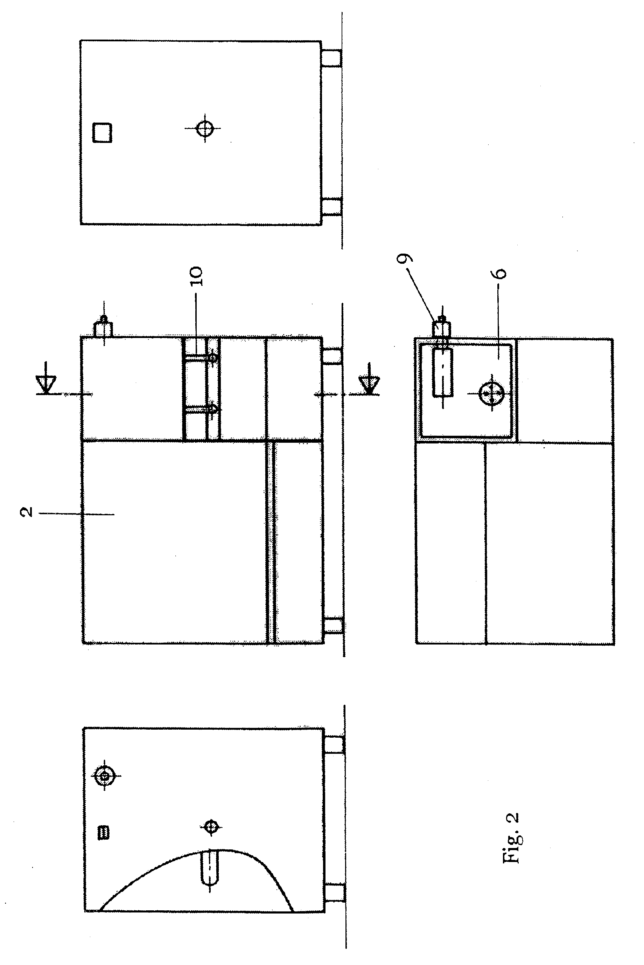

Figure 2 shows elevation, cross section and plan views of the feeding troughs of the previous figure.

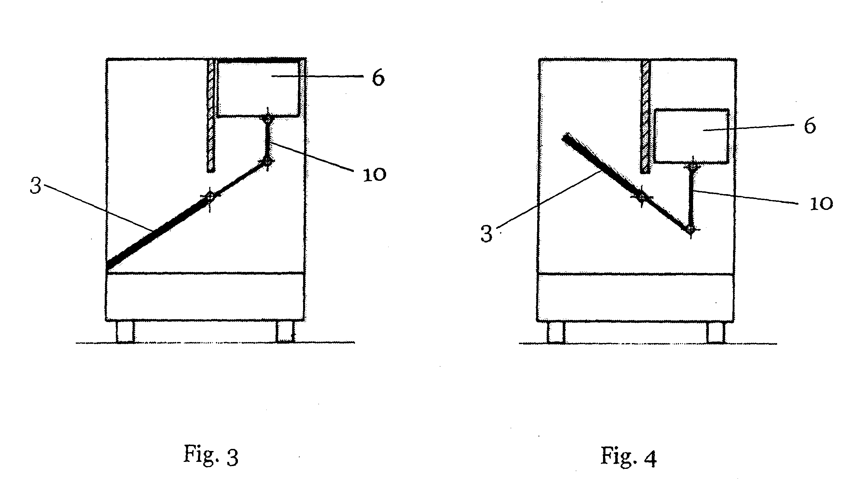

Figures 3 and 4 represent a vertical section of this feeding trough when the lid (3) is closed or open respectively.

This feeding trough comprises a hopper (2) shaped compartment filled with the animal's food, which, by its own weight, descends and fills a lower tray (4), covered by a lid (3) and frontally removable.

Attached to this solid food area formed by the feeding trough (4) there is a water deposit (6) which empties into a lower tray (5) attached to the feeding trough (4) in a controlled manner by means of a valve (8).

This deposit (6) slides downwards into an equally shaped cavity and rests on a lever formed like scissors (10), whose other branch is constituted by the lid (3) of the feeding trough (4), such that when the deposit (6) is filled, it descends as the lid (3) is opened, the animal taking advantage of that moment to eat. When a predetermined amount of water has decanted from the deposit (6) to the drinking trough (5) and the latter loses weight as a result, it moves upwards again, thereby closing the lid (3) on the feeding trough (4).

As mentioned, emptying the water from the deposit (6) to the drinking trough (5) is controlled by a valve, the regulation thereof achieves controlling the time it takes to empty and, as a result, the time the lid (3) is open.

A programmer (7) fed by a battery is placed between the water inlet (3) and the deposit (6), limiting the pass of water at determined periods of the day in order to thus establish a daily eating order, such that the animal always has water in the drinking trough (5) but only has solid food at those programmed periods of the day and while said recipient (6) is filled and is in its most sunken position within the cavity defined in the apparatus of the present invention.

The assembly is closed with an upper lid (1), either hinged or fitted on, which can be provided with safety closure means so that the animal cannot access the inside containing the food or mechanisms.

It is not deemed necessary to extend this description so that any skilled person in the art may understand the scope of the invention and the advantages derived thereof.

The terms in which this specification has been written must always be taken in a broad and non-limiting sense.

The materials, shape and arrangement of the elements will be susceptible to variation as long as it implies no alteration of the essential features of the invention, which are claimed below.

## Claims

1. A feeding trough for domestic animals, comprising a solid food hopper (2) which is emptied on a lower tray (4)as the food is consumed, and attached to them a water deposit emptying into a drinking trough (5), **characterized** as said deposit (6) slides downwards and rests on a lever similar to scissors (10), whose opposite branch is constituted by a lid (3) placed on the feeding trough (4), such that when the deposit (6) is full, it descends from its natural location, opening the lid (3) to permit the animal to eat, whereas when a part of the deposit (6) empties into a drinking trough (5), it is lifted again, closing the lid (3) on the feeding trough (4)to prevent the animal from eating.

2. A feeding trough for domestic animals according to claim 1, **characterized in that** a programmer (7) fed by a battery is placed between the deposit (6) and the water inlet (9), limiting the pass of water at determined periods of the day so as to thus establish a daily eating order.

3. A feeding trough for domestic animals according to the previous claims, **characterized in that** the emptying of the water from the deposit (6) to the drinking trough (5) is controlled by a valve, the regulation thereof controls the time it takes the deposit to empty and, as a result, the time the lid (3) is open.
